# EUROPEAN PATENT APPLICATION

(11) **EP 2 451 122 A2**
(43) Date of publication of application: **09.05.2012**
(21) Application number: 11174144.3
(22) Date of filing: 15.07.2011
(51) Int. Cl.: H04L 12/28, H04L 29/08

(54) **Mobile device and control method thereof**

(30) Priority: 05.11.2010 KR 20100109889
(71) Applicant: Samsung Electronics Co., Ltd., Suwon-si, Gyeonggi-do (KR)
(72) Inventor: Jung, Jae-yoon, Gyeonggi-do (KR); Hong, Jin-woo, Gyeonggi-do (KR); Park, Si-hong, Seoul (KR)
(74) Representative: Hewett, Jonathan Michael Richard

(57) **Abstract**

Disclosed are a mobile device and a control method thereof. The mobile device includes: a communication section or unit which communicates with a plurality of external devices on a predetermined network; a sensor section or unit which detects an indication direction of the mobile device with reference to a specific part of a casing of the mobile device; and a control section or unit which selects external device location information corresponding to the indication direction of the mobile device detected by the sensor section or unit among a plurality of external device location information corresponding to the plurality of respective external devices, and controls the communication section to start communication with an external device corresponding to the selected external device location information.

## Description

The present invention relates to a mobile device and a control method thereof, and more particularly, to a mobile device which can select an external device corresponding to an indication direction of the mobile device among a plurality of external devices which is capable of communicating with the mobile device and can start communication with the selected external device, and a control method thereof.

A plurality of electronic devices are generally used in a single home. In this case, a home network may be provided to connect the plurality of electronic devices through a network.

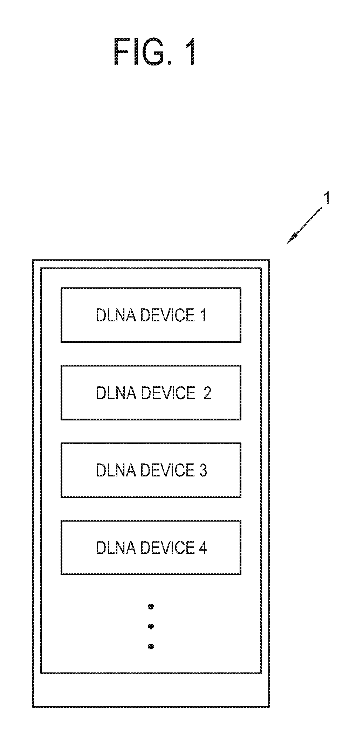

In order for a specific electronic device of the plurality of electronic devices in the home network to communicate with a different electronic device therein, the specific electronic device should select the different electronic device which is a communication target. FIG. 1 illustrates a process of selecting a different electronic device in a home network by a specific electronic device 1 therein in the related art. according to the related art, an electronic device 1 searches first to fourth DLNA (Digital Living Network Alliance) devices and the like which are present in the home network and are capable of communicating with the electronic device 1, and displays the searched result as a list. A user selects any one of the DLNA devices which is a communication target from the displayed list through an input section and starts communication with the selected DLNA device. In this method, since the names of the electronic devices which are communication targets are simply listed, the user should memorize the names of the electronic devices to correctly select a desired electronic device, which is inconvenient to the user in selecting the electronic device.

According to an aspect of the present invention, there is provided a mobile device which provides a user interface for selection of an external device which is a communication target among a plurality of external devices in a home network using an indication direction of the mobile device, and a control method thereof. The foregoing and/or other aspects may be achieved by providing a mobile device including: a communication section or unit which communicates with a plurality of external devices on a predetermined network; a sensor section or unit which detects an indication direction of the mobile device with reference to a part of a casing of the mobile device; and a control section or unit which selects external device location information corresponding to the indication direction of the mobile device detected by the sensor section or unit among the external device location information corresponding to the plurality of respective external devices, and controls the communication section or unit to start communication with an external device corresponding to the selected external device location information.

The indication direction of the mobile device may include an elevation angle and an azimuth angle between an indication direction of the part of the casing of the mobile device and a predetermined reference line.

The mobile device may further include a storage section which stores the external device location information corresponding to the plurality of respective external devices, and the external device location information may be stored in advance as indication direction of the mobile device.

The control section may select an indication direction corresponding to the detected indication direction of the mobile device among the indication directions corresponding to the plurality of respective external devices stored in the storage section, and control the communication section to start communication with the external device corresponding to the selected indication direction.

The stored indication directions respectively corresponding to the plurality of external devices may be indication directions based on predetermined location information about the mobile device.

The storage section may store a plurality of pieces of location information about the mobile device, and store the plurality of indication directions corresponding to the plurality of respective external devices with respect to each piece of the location information about the mobile device.

The location information about the mobile device may include altitude, latitude and longitude detected by the sensor section.

The mobile device may further include: a storage section which stores in advance a plurality of indication directions corresponding to the plurality of respective external devices based on predetermined location information about the mobile device; and a location change calculation section which calculates, if the sensor section detects change in the location of the mobile device with reference to the stored location information about the mobile device, the amount of the location change based on the detection result, and the location information about the mobile device include altitude, latitude and longitude detected by the sensor section.

If the sensor section detects an indication direction of the mobile device in an arbitrary location, the control section may control the location change calculation section to calculate the location change amount of the detected arbitrary location with reference to the stored location information about the mobile device, select an indication direction corresponding to the detected indication direction among the plurality of stored indication directions corresponding to the plurality of external devices using the calculated location change amount, and control the communication section to start communication with the external device corresponding to the selected indication direction.

The sensor section may include at least one of a gyro sensor, an acceleration sensor, an altitude sensor and a GPS sensor.

The mobile device may further include a user input section through which a user selection is inputted, and the control section may control the communication section to transmit a control signal according to the user selection which is inputted through the user input section to the external device which is a target of the communication start.

The foregoing and/or other aspects may be achieved by providing a control method of a mobile device which can communicate with a plurality of external devices, including: detecting an indication direction of the mobile device with reference to a specific part of a casing of the mobile device by a sensor section; selecting external device location information corresponding to the detected indication direction of the mobile device among the external device location information corresponding to the plurality of respective external devices; and starting communication with an external device corresponding to the selected external device location information.

The indication direction may include an elevation angle and an azimuth angle between an indication direction of the specific part of the casing of the mobile device and a predetermined reference line.

The method may further include storing the external device location information corresponding to the plurality of respective external devices, and the external device location information may be stored in advance as indication direction of the mobile device.

The stored indication directions corresponding to the plurality of respective external devices may be based on predetermined location information about the mobile device.

A plurality of pieces of the location information about the mobile device may be stored, and a plurality of indication directions corresponding to the plurality of respective external devices may be stored with respect to each piece of the location information about the mobile device.

The location information about the mobile device may include altitude, latitude and longitude detected by the sensor section.

The method may further include storing in advance a plurality of indication directions corresponding to the plurality of respective external devices based on predetermined location information about the mobile device, and the location information about the mobile device may include altitude, latitude and longitude detected by the sensor section.

The method may further include in the selection of the external device location information, calculating, if change in the location of the mobile device with reference to the stored location information about the mobile device is detected by the sensor section, the amount of the location change based on the detection result, and an indication direction corresponding to the indication direction detected by the sensor section may be selected from the plurality of stored indication directions corresponding to the plurality of respective external devices using the calculated location change amount.

The sensor section may include at least one of a gyro sensor, an acceleration sensor, an altitude sensor and a GPS sensor.

The method may further include: inputting a user selection; and transmitting a control signal according to the inputted user selection to the external device which is a target of the communication.

As described above, according to an aspect of the present invention, there is provided a mobile device and a control method thereof which is provided with a user interface capable of selecting a desired external device, which is a communication target, among a plurality of external devices present in a predetermined network using a simple indication direction of the mobile device, to thereby enhance user convenience.

The above and/or other aspects will become apparent and more readily appreciated from the following description of the exemplary embodiments, taken in conjunction with the accompanying drawings, in which:
FIG. 1 is a diagram illustrating a process of selecting any one of a plurality of electronic devices in the related art;
FIG. 2 is a diagram schematically illustrating a system which includes a mobile device and a plurality of external devices, according to an exemplary embodiment;
FIG. 3 is a control block diagram illustrating a mobile device in FIG. 2;
FIG. 4 is a diagram illustrating an indication direction of a mobile device in FIG. 2;
FIG. 5 is a diagram illustrating a process of selecting a plurality of external devices by a mobile device in FIG. 2, according to an exemplary embodiment;
FIG. 6 is a diagram illustrating a process of selecting a plurality of external devices by a mobile device in FIG. 2, according to a second exemplary embodiment;
FIG. 7 is a control flow diagram illustrating a process according to an exemplary embodiment; and
FIG. 8 is a control flow diagram illustrating a process according to another exemplary embodiment.

Below, exemplary embodiments will be described in detail with reference to accompanying drawings so as to be easily realized by a person having ordinary knowledge in the art. The present invention may be embodied in various forms without being limited to the exemplary embodiments set forth herein.

Descriptions of well-known parts are omitted for clarity, and like reference numerals refer to like elements throughout.

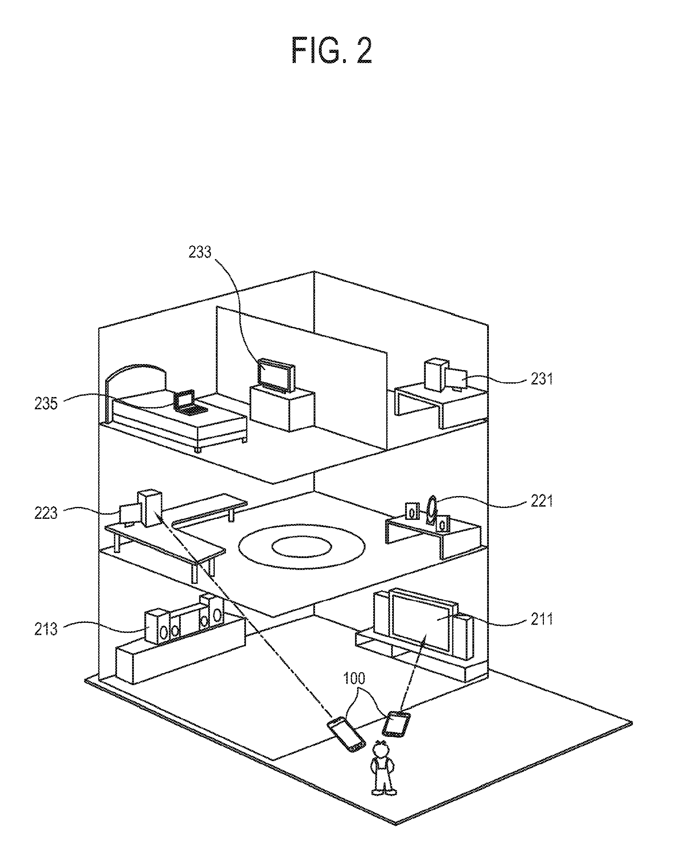

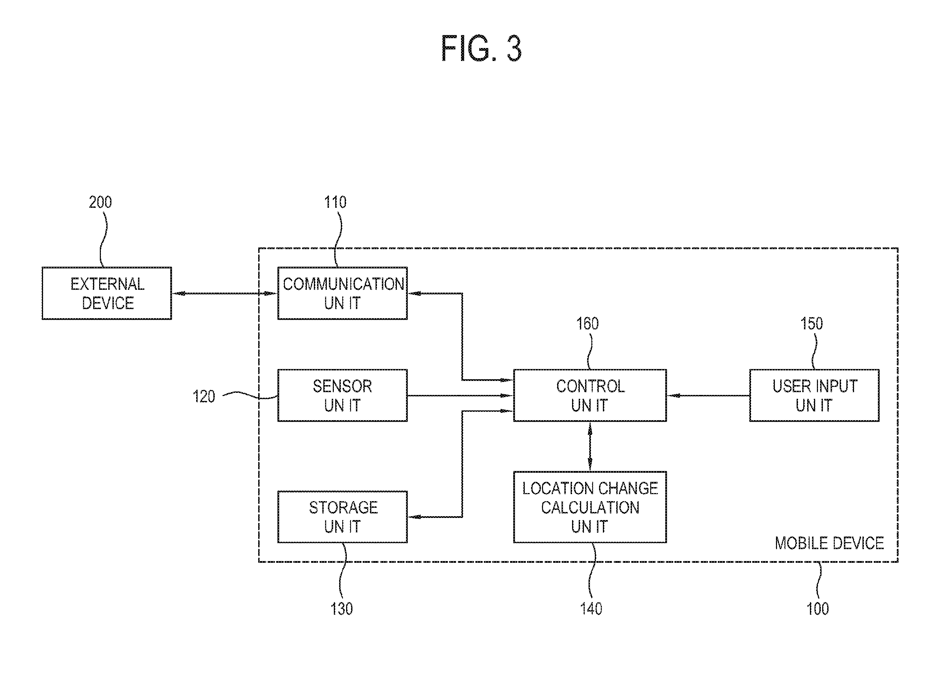

FIG. 2 schematically illustrates a system which includes a mobile device and a plurality of external devices according to an exemplary embodiment, and FIG. 3 is a control block diagram of the mobile device in FIG. 2.

As shown, a mobile device 100 according to an exemplary embodiment forms a network together with a plurality of external devices 200 and can communicate with the external devices 200. The communication can be carried out according to a variety of protocols such as LAN, WLAN, Bluetooth, ZigBee, RF communication, or the like. For example, the mobile device 100 can communicate with the plurality of external devices 200 according to a home network communication standard such as DLNA. Alternatively, the mobile device 100 may form a network together with the plurality of external devices 200 which is connected through the same AP (Access Point), instead of the home network.

As shown in FIG. 2, the mobile device 100 can communicate with a first DTV 211 and an audio player 213 which are disposed in a living room on the first floor, a mini audio player 221 and a first PC 223 which are disposed in a library on the second floor, a second DTV 233 and a notebook computer 235 which are disposed in a first bedroom on the third floor, and a second PC 231 which is disposed in a second bedroom on the third floor, through the home network.

The mobile device 100 can select any one of the plurality of external devices 211, 213, 221, 223, 231, 233 and 235 and start communication with the selected external device. Further, the mobile device 100 can remotely control the selected external device by transmitting a predetermined control signal to the external device.

This embodiment provides a new user interface through which the mobile device 100 can select any one of the plurality of external devices.

As shown in FIG. 3, the mobile device 100 includes a communication unit 110, a sensor unit 120, a storage unit 130, a location change calculation unit 140, a user input unit 150, and a control unit 160 which controls these components.

The communication unit 110 can communicate with the plurality of external devices through a predetermined network, for example, according to a home network communication standard such as DLNA.

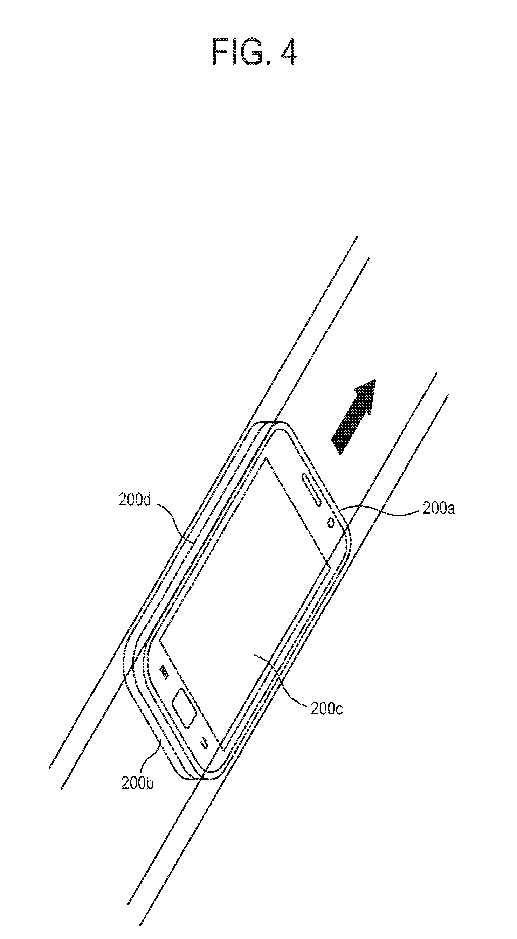

The sensor unit 120 detects an indication direction of the mobile device 100, which can also understood as the direction in which the mobile device is pointing, using a specific part of a casing of the mobile device 100. The indication direction includes an elevation angle and an azimuth angle between a predetermined reference line and an indication direction of the specific part of the casing of the mobile device 100, which will be described in detail with reference to FIG. 4.

As shown in FIG. 4, the casing, or the housing, of the mobile device 100 may have a rectangular parallelepiped shape, for example. The rectangular parallelepiped casing, or housing, includes an upper edge part 200a, a lower edge part 200b, a front surface part 200c, a rear surface part (not shown), a left edge part 200d and a right edge part (not shown). The upper edge part 200a and the lower edge part 200b refer to upper and lower edge parts of the mobile device 100 which are intuitively recognized by a user, and the front surface part 200c refers to a surface part in which a display screen of the mobile device 100 is disposed. In addition, the other parts can be defined with reference to the front surface part 200c on the basis of common sense. The indication direction of the mobile device 100 may be, for example, a direction (arrow direction in FIG. 4) in which the upper edge part 200a indicates an arbitrary communication target. Alternatively, the indication direction of the mobile device 100 may be a direction in which the left edge part 200d indicates the location of the communication target. In this way, the indication direction of the mobile device 100 can be a direction in which a user intuitively indicates the communication target using the specific part of the casing or housing of the mobile device 100.

The sensor unit 120 detects the indication direction of the specific part of the casing or housing of the mobile device 100 with respect to the predetermined reference line to measure an elevation angle and an azimuth angle of the indication direction in predetermined spherical coordinates. The sensor unit 120 includes at least one of a gyro sensor, an acceleration sensor, an altitude sensor and a GPS sensor. The gyro sensor or a gyroscope measures a movement direction or an angular velocity of a moving object. The acceleration sensor measures dynamic forces such as acceleration, vibration, shock of an object. The altitude sensor measures an absolute altitude of an object. The GPS sensor measures the location of an object as latitude and/or longitude using a satellite signal. Accordingly, the sensor unit 120 can detect the indication direction of the mobile device 100 using the gyro sensor, can measure a movement distance of the mobile device 100 using the acceleration sensor, and can measure the location of the mobile device 100 as altitude and/or latitude and longitude using the altitude sensor and/or the GPS sensor.

The storage unit 130 stores a plurality of external device location information corresponding to the respective external devices 211, 213, 221, 223, 231, 233 and 235. Here, the plurality of external device location information is stored in advance as a plurality of indication directions of the mobile device 100.

The storage unit 130 may store the plurality of indication directions corresponding to the plurality of respective external devices 211, 213, 221, 223, 231, 233 and 235, with respect to predetermined location information about the mobile device 100.

The location information about the mobile device 100 includes altitude, latitude and longitude detected by the sensor unit 120.

The storage unit 130 may store a plurality of pieces of location information about the mobile device 100. In this case, the plurality of indication directions of the mobile device 100 is stored corresponding to the plurality of respective external devices 211, 213, 221, 223, 231, 233 and 235, with respect to each piece of the location information.

For example, the storage unit 130 may store a plurality of indication directions corresponding to the plurality of respective external devices 211, 213, 221, 223, 231, 233 and 235 for a first location of the mobile device 100, and may store a plurality of indication directions corresponding to the plurality of respective external devices 211, 213, 221, 223, 231, 233 and 235 for a second location of the mobile device 100. In this case, the first location of the mobile device 100 is different from the second location thereof in at least one of altitude, latitude and longitude.

The location change calculation unit 140 can calculate the amount of change in the location of the mobile device 100 measured by the sensor unit 120 with reference to the location information about the mobile device 100 stored in the storage unit 130. Since the location information about the mobile device includes altitude, latitude and longitude in a specific location, the location change amount of the mobile device 100 may be represented as the amount of change in altitude, latitude and longitude.

The user input unit 150 used for inputting a user selection may include a plurality of physical function keys provided in the mobile device 100, or may include a touch panel provided in a display screen of the mobile device 100.

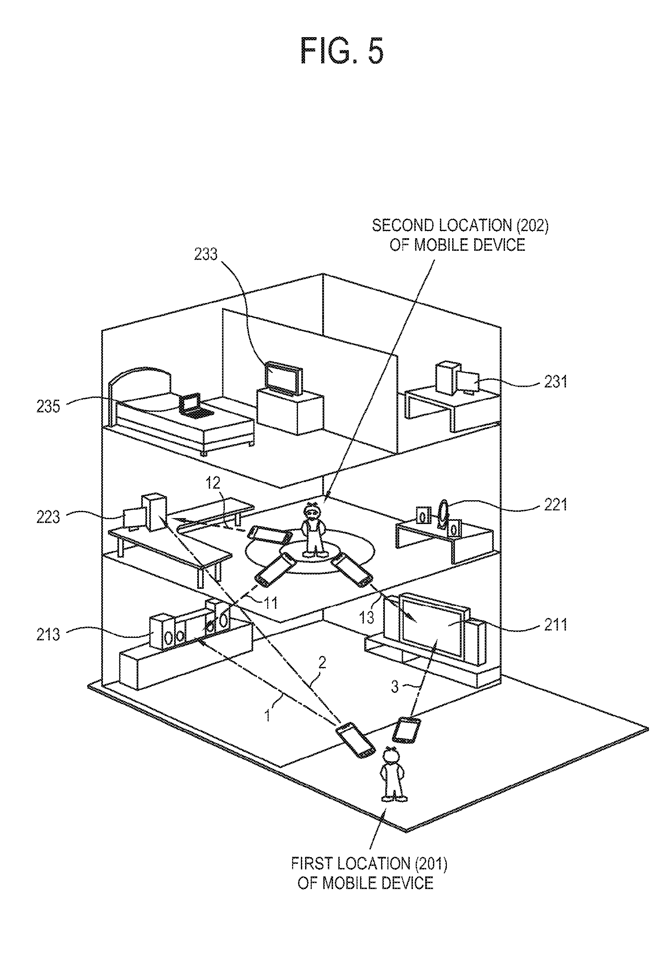

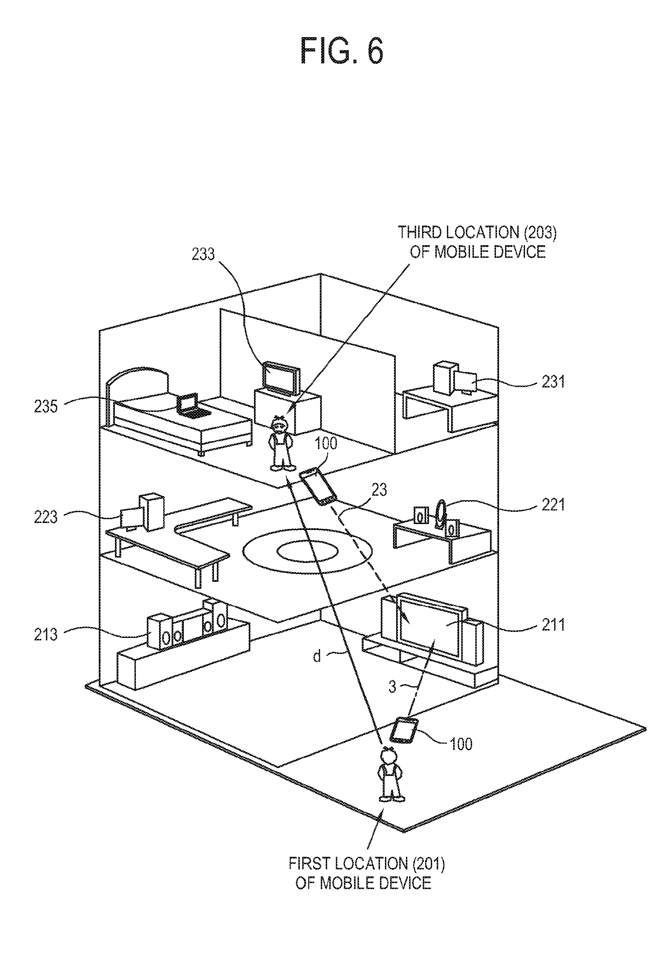

The control unit 160 selects external device location information corresponding to the indication direction of the mobile device 100, measured by the sensor unit 120, among the plurality of external device location information corresponding to the plurality of respective external devices, and controls the communication unit 110 to start communication with an external device corresponding to the selected external device location information. The control process of the control unit 160 will be described in detail with reference to FIGS. 5 and 6.

FIG. 5 illustrates a process of selecting a plurality of external devices by the mobile device in FIG. 2 according to an exemplary embodiment, and illustrates an example in which any one of the plurality of external devices can be selected in an absolute or fixed location of the mobile device 100.

The mobile device 100 generates a list of all the external devices 211, 213, 221, 223, 231, 233 and 235 which may be communication targets in the home network. In a first location 201 of the mobile device 100, a user selects the first DTV 211 disposed in the living room on the first floor from the list and allows the upper edge part 200a of the mobile device 100 to direct, or point, toward an indication direction 3. The sensor unit 120 detects the indication direction 3 and measures an elevation angle and an azimuth angle of the indication direction 3 in the spherical coordinates. The control unit 160 stores the measured elevation angle and azimuth angle in the storage unit 130 as the indication direction 3 corresponding to the first DTV 211. In a similar way, an indication direction 1 corresponding to the audio player 213 disposed in the living room on the first floor and an indication direction 2 corresponding to the PC 223 disposed in the library on the second floor are stored in the storage unit 130.

When the user wants to communicate with the first DTV 221 on the first floor in the first location 201 of the mobile device 100, the user has only to direct, or point, the mobile device 100 toward the indication direction 3. Then, the sensor unit 120 detects the indication direction 3 of the mobile device 100. Then, the control unit 160 selects an external device corresponding to the detected indication direction among the plurality of indication directions stored in the storage unit 130, that is, the first DTV 211, and controls the communication unit 110 to start communication with the first DTV 211.

Further, the user may store the plurality of indication directions corresponding to the plurality of respective external devices 211, 213, 221, 223, 231, 233 and 235 in the storage unit 130, in a second location 202 of the mobile device 100. In the second location 202 of the mobile device 100, the user selects the first DTV 211 in the living room on the first floor from the list, and allows the upper edge part 200a of the mobile device 100 to direct, or point, toward an indication direction 13. The sensor unit 120 detects the indication direction 13 and measures an elevation angle and an azimuth angle of the detected indication direction 13 in the spherical coordinates. The control unit 160 stores the measured elevation angle and azimuth angle in the storage unit 130 as the indication direction 13 corresponding to the first DTV 211. In a similar way, an indication direction 11 corresponding to the audio player 213 in the living room on the first floor and an indication direction 12 corresponding to the PC 223 in the library on the second floor are stored in the storage unit 130.

When the user wants to communicate with the first DTV 211 on the first floor in the second location 202 of the mobile device 100, the user has only to direct, or point, the mobile device 100 toward the indication direction 13. The sensor unit 120 detects the indication direction 13 of the mobile device 100. The control unit 160 selects an external device corresponding to the detected indication direction 13 among the plurality of indication directions stored in the storage unit 130, and controls the communication unit 110 to start communication with the first DTV 211.

As described above, the plurality of pieces of location information about the mobile device 100 is stored in the storage unit 130, and the plurality of indication directions corresponding to the plurality of external devices is stored in the storage unit 130 with respect to each piece of location information about the mobile device 100. In order to select any one of the plurality of external devices, any one of the plurality of pieces of location information about the mobile device 100 should be firstly selected. That is, any one of the first location 201 of the mobile device 100 and the second location 202 thereof should be firstly selected. If the first location 201 is selected, the upper edge part 200a of the mobile device 100 should direct, or point, toward the indication direction 3 to select the first DTV 211 in the living room on the first floor. On the other hand, if the second location 202 is selected, the upper edge part 200a of the mobile device 100 should direct, or point, toward the indication direction 13 to select the first DTV 211 in the living room on the first floor.

FIG. 6 illustrates a process of selecting a plurality of external devices by the mobile device in FIG. 2 according to another exemplary embodiment, and illustrates an example in which any one of the plurality of external devices can be selected in a relative or variable location of the mobile device 100.

In the exemplary embodiment in FIG. 5, the plurality of indication directions corresponding to the plurality of respective external devices 211, 213, 221, 223, 231, 233 and 235 with respect to the plurality of pieces of location information (first and second locations 201 and 202) about the mobile device 100 is stored in the storage unit 130. However, in this other exemplary embodiment, the plurality of indication directions corresponding to the plurality of respective external devices 211, 213, 221, 223, 231, 233 and 235 with respect to one piece of location information (first location 201) about the mobile device 100 is already stored in the storage unit 130.

That is, the plurality of indication directions corresponding to the plurality of respective external devices 211, 213, 221, 223, 231, 233 and 235 with respect to one piece of location information (first location 201) about the mobile device 100 is pre-stored in the mobile device 100.

The user selects the first DTV 211 in the living room on the first floor in the first location 201 of the mobile device 100 and allows the upper edge part 200a of the mobile device 100 to direct, or point, toward the first DTV 21 in the indication direction 3. The sensor unit 120 detects the indication direction 3 corresponding to first DTV 211 as an elevation angle and an azimuth angle in the spherical coordinates. The detected indication direction 3 (elevation angle and azimuth angle) is stored in the storage unit 130. Further, the sensor unit 120 detects the first location 201 of the mobile device 100 as altitude, latitude and longitude. The detected first location 201 (altitude, latitude and longitude) is stored in the storage unit 130. In a similar way, indication directions corresponding to the other external devices in the first location 201 of the mobile device 100 can be stored in the storage unit 130.

In this state, it is assumed that the user wants to select any one of the external devices 211, 213, 221, 223, 231, 233 and 235 using the mobile device 100 in the first bedroom on the third floor.

The user allows the upper edge part 200a to direct, or point, toward the first DTV 211 in the living room on the first floor in an indication direction 23, in a current third location 203 of the mobile device 100 in the first bedroom on the third floor, regardless of the indication directions stored in the storage unit 130.

The sensor unit 120 measures the current location information (third location 203) about the mobile device 100 as altitude, latitude and longitude, and measures the indication direction 23 of the mobile device 100 as an elevation angle and an azimuth angle in the spherical coordinates.

The control unit 160 compares the measured altitude, latitude and longitude of the third location 203 of the mobile device 100 with the altitude, latitude and longitude of the first location 201 thereof stored in the storage unit 130. If the values are different, the control unit 160 controls the location change calculation unit 150 to calculate the amount of change in the location of the mobile device 100.

The control unit 160 selects an indication direction corresponding to the detected indication direction 23, from the indication directions corresponding to the plurality of respective external devices stored in the storage unit 130, based on the calculated location change amount, and controls the communication unit 110 to start communication with the first DTV 211 which is an external device corresponding to the selected indication direction. Here, the control unit 160 can seek the elevation angle and the azimuth angle of the indication direction 3 stored in the storage unit 130 from the elevation angle and the azimuth angle of the detected indication direction 23 using the calculated location change amount, that is, can select the indication direction 3 among the plurality indication directions stored in the storage unit 130.

In this exemplary embodiment the user has only to set once the indication directions corresponding to the plurality of external devices one time with respect to a single location of the mobile device 100, compared with the exemplary embodiment in FIG. 5. Thus, the user does not need to memorize the names of the plurality of external devices to select any one of the external devices, nor to memorize the plurality of indication directions corresponding to the plurality of external devices stored in the storage unit 130. Whether the mobile device 100 is located in any place, the user has only to direct, or point, the upper edge part 200a of the mobile device 100 toward an absolute or fixed location of each external device, which can enhance user convenience in selection of any one of the external devices.

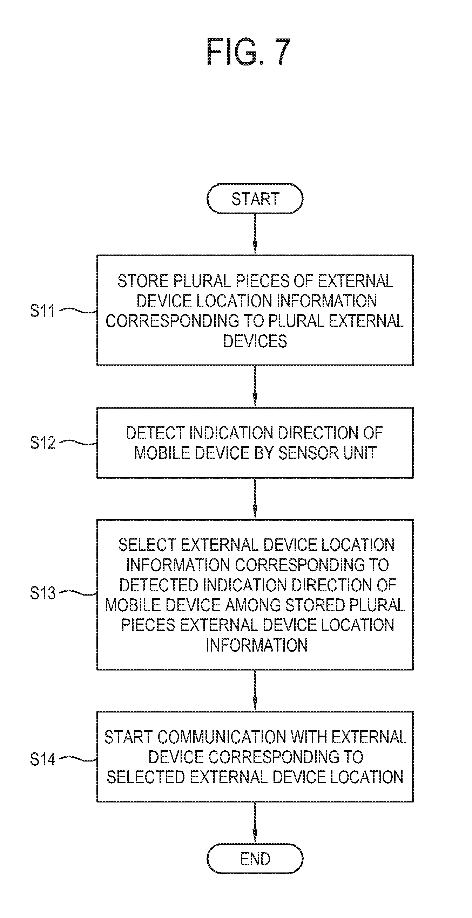

FIG. 7 is a control flow diagram illustrating the process according to an exemplary embodiment.

As shown, the mobile device 100 includes pre-stored plurality of external device location information corresponding to the plurality of external devices (S11). The external device location information is stored as indication directions of the mobile device and may be based on predetermined location information about the mobile device 100. The location information about the mobile device 100 may include altitude, latitude and longitude detected by the sensor unit 120. In operation S11, the plurality of pieces of location information about the mobile device 100 may be stored, and in this case, the plurality of indication directions corresponding to the plurality of external devices may be stored with respect to each piece of location information about the mobile device 100.

Then, the sensor unit 120 detects the indication direction of the mobile device 100 with reference to a specific part of the casing or housing of the mobile device 100 (S12).

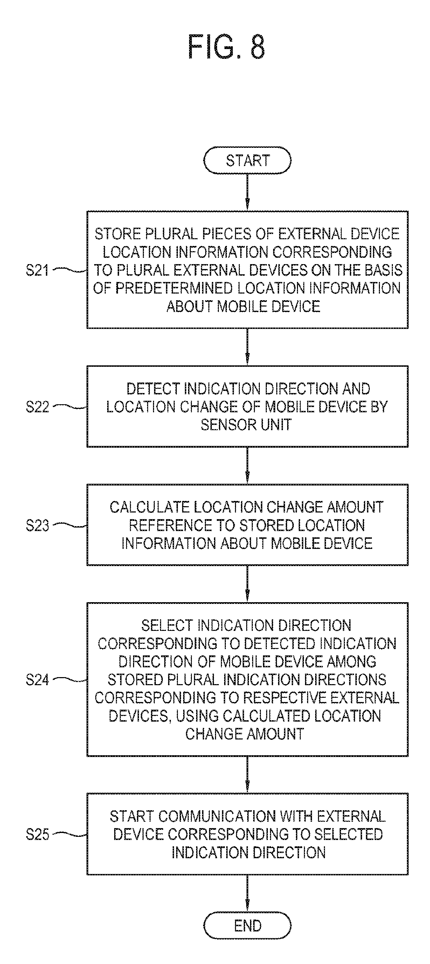

Then, the control unit 160 selects external device location information corresponding to the indication direction of the mobile device 100 detected by the sensor unit 120 among the plurality of external device location information corresponding to the plurality of respective external devices stored in the storage unit 130 (S13), and controls the communication unit 110 to start communication with an external device corresponding to the selected posture information (S14). FIG. 8 is a control flow diagram illustrating the process according to another exemplary embodiment.

As shown, the mobile device 100 stores in advance a plurality of external device location information corresponding to the plurality of external devices (S21). The external device location information is stored as indication directions of the mobile device and may be based on predetermined location information about the mobile device 100. The location information about the mobile device 100 may include altitude, latitude and longitude detected by the sensor unit 120.

Then, the sensor unit 120 detects an indication direction of the mobile device 100 with reference to a specific part of the casing or housing of the mobile device 100, and detects change in the location of the mobile device 100 (S22).

Then, the location change calculation unit 150 calculates the location change amount with reference to the stored location information about the mobile device 100 (S23).

Then, the control unit 160 selects an indication direction corresponding to the indication direction of the mobile device 100 detected by the sensor unit 120, from the plurality of stored indication directions corresponding to the respective external devices, using the calculated location change amount (S24), and controls the communication unit 110 to start communication with an external device corresponding to the selected indication direction (S25).

Although a few exemplary embodiments have been shown and described, it will be appreciated by those skilled in the art that changes may be made in these exemplary embodiments without departing from the invention, the scope of which is defined in the appended claims.

## Claims

1. A mobile device comprising:
a communication unit which is operable to communicate with one of a plurality of external devices on a network;
a sensor unit which detects an indication direction of the mobile device with reference to a part of a casing of the mobile device; and
a control unit which selects external device location information corresponding to the indication direction of the mobile device detected by the sensor unit among a plurality of external device location information respectively corresponding to the plurality of external devices, and controls the communication unit to start communication with the one of the plurality of external devices corresponding to the selected external device location information.

2. The mobile device according to claim 1,
wherein the indication direction comprises an elevation angle and an azimuth angle between an indication direction of the part of the casing of the mobile device and a predetermined reference line.

3. The mobile device according to claims 1 or 2,
further comprising a storage unit which stores the plurality of external device location information respectively corresponding to the plurality of external devices,
wherein the plurality of external device location information is pre-stored as indication directions in the mobile device.

4. The mobile device according to claim 3,
wherein the control unit selects an indication direction corresponding to the detected indication direction of the mobile device among the indication directions respectively corresponding to the plurality of external devices stored in the mobile device, and controls the communication unit to start communication with one of the plurality of external devices corresponding to the selected indication direction.

5. The mobile device according to claim 3 or claim 4,
wherein the indication direction corresponding to one of the plurality of external devices is indication direction based on predetermined location information about the mobile device.

6. The mobile device according to any one of claims 3 to 5,
wherein the storage unit stores a plurality of pieces of location information about the mobile device, and stores indication directions respectively corresponding to the plurality of external devices with respect to each one of the plurality of pieces of the location information about the mobile device.

7. The mobile device according to any one of claims 1 to 6,
wherein the location information about the mobile device comprises altitude, latitude and longitude detected by the sensor unit.

8. The mobile device according to claim 1 or claim 2, further comprising:
a storage unit which stores in advance a plurality of indication directions respectively corresponding to the plurality of external devices on the basis of predetermined location information about the mobile device; and
a location change calculation unit which calculates a location change amount of the mobile device, if the sensor unit detects a change in the location of the mobile device with reference to the stored location information about the mobile device,
wherein the location information about the mobile device comprises altitude, latitude and longitude detected by the sensor unit.

9. The mobile device according to claims 8,
wherein the sensor unit detects an indication direction of the mobile device in an arbitrary location, the control unit controls the location change calculation unit to calculate the location change amount of the mobile device with reference to the stored location information about the mobile device, selects an indication direction corresponding to the detected indication direction among the plurality of stored indication directions corresponding to the plurality of external devices using the calculated location change amount of the mobile device, and controls the communication unit to start communication with the external device corresponding to the selected indication direction.

10. The mobile device according to any one of claims 1 to 9,
wherein the sensor unit comprises at least one of a gyro sensor, an acceleration sensor, an altitude sensor and a GPS sensor.

11. The mobile device according to any one of claims 1 to 10, further comprising a user input unit through which a user selection is inputted,
wherein the control unit controls the communication unit to transmit a control signal according to the user selection which is inputted through the user input unit to the one of the plurality of external devices which is a target of the communication.

12. A control method of a mobile device which is operable to communicate with one of a plurality of external devices, the method comprising:
detecting an indication direction of the mobile device with reference to a part of a casing of the mobile device by a sensor unit;
selecting external device location information corresponding to the detected indication direction of the mobile device among a plurality of external device location information respectively corresponding to the plurality of external devices; and
starting communication with the one of the plurality of external devices corresponding to the selected external device location information.

13. The method according to claim 12,
wherein the indication direction comprises an elevation angle and an azimuth angle between an indication direction of the part of the casing of the mobile device and a predetermined reference line,
the method further comprising storing the plurality of external device location information respectively corresponding to the plurality of external devices,
wherein the plurality of external device location information is pre-stored as indication directions in the mobile device.

14. The method according to claim 13,
wherein the plurality of external device location information corresponding to the plurality of external devices is based on predetermined location information of the mobile device, and
wherein in the storing of the plurality of external device location information, a plurality of pieces of the location information about the mobile device is stored, and a plurality of external device location information corresponding to the plurality of external devices is stored with respect to each piece of the location information about the mobile device.

15. The method according to claim 12, further comprising:
pre-storing a plurality of indication directions corresponding to the plurality of external devices on the basis of predetermined location information about the mobile device, and
calculating a location change amount of the mobile device if change in the location of the mobile device with reference to the predetermined location information about the mobile device is detected by the sensor unit,
wherein the predetermined location information about the mobile device comprises altitude, latitude and longitude detected by the sensor unit, and
wherein in the selecting of the external device location, an indication direction corresponding to the indication direction detected by the sensor unit is selected from the pre-stored plurality of indication directions corresponding to the plurality of external devices using the calculated location change amount of the mobile device.
